(19) Europäisches Patentamt / European Patent Office / Office européen des brevets

(11) **EP 3 655 376 B1**

(12) **FASCICULE DE BREVET EUROPEEN**

(45) Date de publication et mention de la délivrance du brevet:
**06.09.2023 Bulletin 2023/36**

(21) Numéro de dépôt: **18739565.2**

(22) Date de dépôt: **18.07.2018**

(51) Classification Internationale des Brevets (IPC):
**C04B 35/64** *(2006.01)*   **C04B 35/48** *(2006.01)*
**C04B 35/626** *(2006.01)*   **C04B 35/63** *(2006.01)*
**C04B 35/632** *(2006.01)*   **B02C 17/20** *(2006.01)*
**C04B 35/482** *(2006.01)*   **C04B 35/488** *(2006.01)*

(52) Classification Coopérative des Brevets (CPC):
**C04B 35/64; B02C 17/20; C04B 35/48;**
**C04B 35/481; C04B 35/482; C04B 35/4885;**
**C04B 35/6261; C04B 35/62625; C04B 35/63;**
**C04B 35/632;** C04B 2235/3206; C04B 2235/3217;
C04B 2235/3225; C04B 2235/3229;
C04B 2235/3232;                              (Cont.)

(86) Numéro de dépôt international:
**PCT/EP2018/069519**

(87) Numéro de publication internationale:
**WO 2019/016270 (24.01.2019 Gazette 2019/04)**

(54) **BILLES FRITTEES DE ZIRCON**

GESINTERTE ZIRKONIUMKUGELN

SINTERED ZIRCONIUM BALLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2017 FR 1756893**

(43) Date de publication de la demande:
**27.05.2020 Bulletin 2020/22**

(73) Titulaire: **SAINT-GOBAIN CENTRE DE RECHERCHES ET D'ETUDES EUROPEEN**
**92400 Courbevoie (FR)**

(72) Inventeur: **NONNET, Emmanuel**
**84550 Saint-Saturnin Les Avignon (FR)**

(74) Mandataire: **Cabinet Nony**
**11 rue Saint-Georges**
**75009 Paris (FR)**

(56) Documents cités:
WO-A1-2013/011436      WO-A2-2011/077380
FR-A1- 2 882 749         FR-A1- 2 929 941
FR-A1- 2 978 143

(52) Classification Coopérative des Brevets (CPC):
   (Cont.)
   C04B 2235/3244; C04B 2235/3246;
   C04B 2235/3248; C04B 2235/3272;
   C04B 2235/3418; C04B 2235/349;
   C04B 2235/5409; C04B 2235/5436;
   C04B 2235/5445; C04B 2235/602; C04B 2235/606;
   C04B 2235/6562; C04B 2235/6565;
   C04B 2235/6567; C04B 2235/668; C04B 2235/76;
   C04B 2235/77; C04B 2235/788; C04B 2235/80;
   C04B 2235/94; C04B 2235/95; C04B 2235/96

**Description**

**Domaine technique**

La présente invention se rapporte à des billes frittées de zircon, à un procédé de fabrication de ces billes, et à l'utilisation de ces billes en tant qu'agents de broyage, agents de dispersion en milieu humide ou pour le traitement de surfaces.

**Etat de la technique**

Les industries des peintures, encres, colorants, laques magnétiques, ou composés agrochimiques utilisent par ailleurs des billes pour la dispersion et l'homogénéisation de constituants liquides et solides.

L'industrie minérale met en oeuvre des billes pour le broyage fin de matières éventuellement prébroyées à sec par des procédés traditionnels, notamment pour le broyage fin de carbonate de calcium, d'oxyde de titane, de gypse, de kaolin et de minerai de fer.

Dans le domaine du microbroyage, on connaît le sable à particules arrondies, les billes de verre, les billes métalliques et les billes céramiques.

- Le sable à particules arrondies, comme le sable d'OTTAWA par exemple, est un produit naturel et bon marché, mais inadapté aux broyeurs modernes, pressurisés et à fort débit. En effet, le sable est peu résistant, de faible densité, variable en qualité et abrasif pour le matériel.
- Les billes de verre, largement utilisées, présentent une meilleure résistance, une plus faible abrasivité et une disponibilité dans une gamme de diamètres plus large.
- Les billes métalliques, notamment en acier, présentent une faible inertie vis-à-vis des produits traités, entraînant notamment une pollution des charges minérales et un grisaillement des peintures, et une densité trop élevée nécessitant des broyeurs spéciaux. Elles impliquent notamment une forte consommation d'énergie, un échauffement important et une sollicitation mécanique élevée du matériel.
- Les billes en matière céramique ont une meilleure résistance que les billes de verre, une densité plus élevée et une excellente inertie chimique.

Les billes présentent classiquement une taille comprise entre 0,005 et 10 mm.

On peut distinguer :

- les billes céramiques fondues, généralement obtenues par fusion de composants céramiques, formation de gouttes sphériques à partir de la matière en fusion, puis solidification desdites gouttes, et
- les billes céramiques frittées, généralement obtenues par un façonnage à froid d'une poudre céramique, puis une consolidation par cuisson à haute température.

A la différence des billes frittées, les billes fondues comportent le plus souvent une phase vitreuse intergranulaire très abondante qui vient remplir un réseau de grains cristallisés. Les problèmes rencontrés dans leurs applications respectives par les billes frittées et par les billes fondues, et les solutions techniques adoptées pour les résoudre, sont donc généralement différents. Par ailleurs, du fait des différences importantes entre les procédés de fabrication, une composition mise au point pour fabriquer une bille fondue n'est pas adaptée *a priori* pour fabriquer une bille frittée, et réciproquement.

Afin de servir l'ensemble des marchés décrits ci-dessus, les billes doivent simultanément présenter une bonne résistance à l'usure et une masse volumique élevée.

Le document WO2013/011436A1 décrit des particules frittées de zircon, notamment sous forme de billes, un procédé de fabrication de ces billes, et leur utilisation en tant qu'agents de broyage, agents de dispersion en milieu humide ou pour le traitement de surface.

Un but de l'invention est de fournir des billes répondant à ces contraintes.

**Résumé de l'invention**

L'invention concerne une bille frittée, présentant :

- les phases cristallisées suivantes, en pourcentages en masse sur la base des phases cristallisées et pour un total de 100% :

- 25% ≤ zircon, ou « $Z_1$ » ≤ 94% ;
- 4% ≤ zircone stabilisée + hafnie stabilisée, ou « $Z_2$ » ≤ 61% ;
- zircone monoclinique + hafnie monoclinique, ou « $Z_3$ » ≤ 50% ;
- corindon ≤ 57% ;
- phases cristallisées autres que $Z_1$, $Z_2$, $Z_3$ et corindon < 10% ;

- la composition chimique suivante, en pourcentages en masse sur la base des oxydes et pour un total de 100% :

   33% ≤ $ZrO_2$ + $HfO_2$, ou « $Z_4$ » ≤ 83,4% ;
   $HfO_2$ ≤ 2% ;
   10,6% ≤ $SiO_2$ ≤ 34,7% ;
   $Al_2O_3$ ≤ 50% ;
   0% ≤ $Y_2O_3$, ou « $Z_5$ » ;
   0% ≤ $CeO_2$, ou « $Z_6$ » ;
   0,3% ≤ $CeO_2$ + $Y_2O_3$ ≤ 19%, pourvu que

   (1) $CeO_2$ + 3,76*$Y_2O_3$ ≥ 0,128*Z, et
   (2) $CeO_2$ + 1,3*$Y_2O_3$ ≤ 0,318*Z,

   avec Z=$Z_4$+$Z_5$+$Z_6$-(0,67*$Z_1$*($Z_4$+$Z_5$+$Z_6$)/(0,67*$Z_1$+$Z_2$+$Z_3$)) ;
   MgO ≤ 5% ;
   CaO ≤ 2% ;
   oxydes autres que $ZrO_2$, $HfO_2$, $SiO_2$, $Al_2O_3$, MgO, CaO, $CeO_2$ et $Y_2O_3$ < 5,0%.

Dans un mode de réalisation, la bille frittée présente :

- les phases cristallisées suivantes, en pourcentages en masse sur la base des phases cristallisées et pour un total de 100% :

- 31% ≤ zircon, ou « $Z_1$ » ≤ 94% ;
- 4% ≤ zircone stabilisée + hafnie stabilisée, ou « $Z_2$ » ≤ 61% ;
- zircone monoclinique + hafnie monoclinique, ou « $Z_3$ » ≤ 50% ;
- corindon ≤ 40% ;
- phases cristallisées autres que $Z_1$, $Z_2$, $Z_3$ et corindon < 10% ;

- la composition chimique suivante, en pourcentages en masse sur la base des oxydes et pour un total de 100% :

   37% ≤ $ZrO_2$ + $HfO_2$, ou « $Z_4$ » ≤ 83,4% ;
   $HfO_2$ ≤ 2% ;
   12,6% ≤ $SiO_2$ ≤ 34,7% ;
   $Al_2O_3$ ≤ 35% ;
   0% ≤ $Y_2O_3$, ou « $Z_5$ » ;
   0% ≤ $CeO_2$, ou « $Z_6$ » ;
   0,3% ≤ $CeO_2$ + $Y_2O_3$ ≤ 19%, pourvu que

   (3) $CeO_2$ + 3,76*$Y_2O_3$ ≥ 0,128*Z, et
   (4) $CeO_2$ + 1,3*$Y_2O_3$ ≤ 0,318*Z,

   avec Z=$Z_4$+$Z_5$+$Z_6$-(0,67*$Z_1$*($Z_4$+$Z_5$+$Z_6$)/(0,67*$Z_1$+$Z_2$+$Z_3$)) ;
   MgO ≤ 5% ;
   CaO ≤ 2% ;
   oxydes autres que $ZrO_2$, $HfO_2$, $SiO_2$, $Al_2O_3$, MgO, CaO, $CeO_2$ et $Y_2O_3$ < 5,0%.

Comme on le verra plus en détail dans la suite de la description, les inventeurs ont découvert, de façon inattendue, que cette combinaison de caractéristiques améliore considérablement les propriétés de résistance à l'usure tout en conférant une masse volumique élevée.

Les billes frittées selon l'invention sont ainsi particulièrement bien adaptées à des applications de dispersion en milieu humide, de microbroyage, d'échange thermique et de traitement de surfaces.

Une bille frittée selon l'invention peut encore présenter une ou plusieurs des caractéristiques optionnelles suivantes :

- la teneur en $ZrO_2$+$HfO_2$ est supérieure ou égale à 31%, de préférence supérieure à 35%, de préférence supérieure à 40%, de préférence supérieure à 45%, de préférence supérieure à 50%, et/ou inférieure à 80%, de préférence inférieure à 75%, de préférence inférieure à 70%, en pourcentages en masse sur la base des oxydes ;

- la teneur en $SiO_2$ est supérieure ou égale à 12,6%, de préférence supérieure à 14%, de préférence supérieure à 15%, et/ou inférieure à 30%, de préférence inférieure à 25%, en pourcentages en masse sur la base des oxydes ;

- le rapport de la teneur en $ZrO_2$+$HfO_2$ sur la teneur en $SiO_2$ est supérieur à 1,2, de préférence supérieur à 1,5, de préférence supérieur à 2, de préférence supérieur à 2,2, de préférence supérieur à 2,5 et/ou inférieur à 5, de préférence inférieur à 4,5, de préférence inférieur à 4, de préférence inférieur à 3,5 ;

- la teneur en $Al_2O_3$ est supérieure à 5%, de préférence supérieure à 10%, et/ou inférieure à 40%, de préférence inférieure ou égale à 35%, de préférence inférieure à 30%, de préférence inférieure à 25%, de préférence inférieure à 20%, en pourcentages en masse sur la base des oxydes. Avantageusement, la densité de la bille en est améliorée ;

- la teneur en MgO est supérieure à 0,1%, de préférence supérieure à 0,15%, voire supérieure à 0,2%, voire supérieure à 0,3%, et/ou inférieure à 4%, de préférence inférieure à 3%, de préférence inférieure à 2%, de préférence inférieure à 1,5%, de préférence inférieure à 1%, en pourcentages en masse sur la base des oxydes ;

- la teneur en CaO est supérieure à 0,1%, de préférence supérieure à 0,2%, de préférence supérieure à 0,3%, et/ou inférieure à 1,5%, préférence inférieure à 1%, en pourcentages en masse sur la base des oxydes ;

- la teneur $CeO_2$ + $Y_2O_3$ est supérieure à 0,65%, de préférence supérieure à 0,95%, de préférence supérieure à 1,3%, de préférence supérieure à 1,6%, de préférence supérieure à 1,95%, de préférence supérieure à 2,2%, de préférence supérieure à 3%, en pourcentages en masse sur la base des oxydes ;

- la composition chimique est telle que $CeO_2 + 3,4*Y_2O_3 \geq 0,16*Z$, de préférence $CeO_2 + 2,89*Y_2O_3 \geq 0,185*Z$, de préférence $CeO_2 + 2,39*Y_2O_3 \geq 0,212*Z$, de préférence $CeO_2 + 1,84*Y_2O_3 \geq 0,224*Z$, de préférence $CeO_2 + 1,76*Y_2O_3 \geq 0,229*Z$ ;

- la teneur $CeO_2$ + $Y_2O_3$ est inférieure à 15,5%, de préférence inférieure à 14,3%, de préférence inférieure à 11,6%, en pourcentages en masse sur la base des oxydes ;

- la composition chimique est telle que $CeO_2 + 1,4*Y_2O_3 \leq 0,259*Z$ ;

- dans un mode de réalisation préféré, la teneur en $CeO_2$ est inférieure à 0,2%, de préférence inférieure à 0,1%, de préférence sensiblement nulle ;

- la composition chimique est telle que $Y_2O_3 \geq 1,82*Z$, de préférence $Y_2O_3 \geq 3,44*Z$, de préférence $Y_2O_3 \geq 5,38*Z$ ;

- la teneur en oxydes autres que $ZrO_2$, $HfO_2$, $SiO_2$, $Al_2O_3$, $Y_2O_3$, $CeO_2$, CaO, MgO est inférieure à 4%, de préférence inférieure à 3%, de préférence inférieure à 2%, voire inférieure à 1,5%, voire inférieure à 1%, en pourcentages en masse sur la base des oxydes. De préférence, la teneur en $Na_2O$ est inférieure à 0,8%, de préférence inférieure à 0,5%, de préférence inférieure à 0,3%, de préférence inférieure à 0,2% et/ou la teneur en $K_2O$ est inférieure à 0,8%, de préférence inférieure à 0,5%, de préférence inférieure à 0,3%, de préférence inférieure à 0,2% ;

- les oxydes autres que $ZrO_2$, $HfO_2$, $SiO_2$, $Al_2O_3$, $Y_2O_3$, $CeO_2$, CaO, MgO sont des impuretés ;

- de préférence, la teneur en oxydes d'une bille selon l'invention représente plus de 99%, de préférence plus de 99,5%, de préférence plus de 99,9%, et, de préférence encore, sensiblement 100% de la masse totale de ladite bille ;

- la teneur en zircon (phase $ZrSiO_4$), en pourcentage en masse sur la base de la quantité totale de phases cristallisées, est supérieure ou égale à 31%, de préférence supérieure à 35%, de préférence supérieure à 40% et/ou inférieure à 90%, de préférence inférieure à 85%, de préférence inférieure à 80%, de préférence inférieure à 76%, de préférence inférieure à 72%, de préférence inférieure à 68% ;

- la teneur en zircone (phase $ZrO_2$) + hafnie (phase $HfO_2$) stabilisées, en pourcentage en masse sur la base de la quantité totale de phases cristallisées, est supérieure à 5%, de préférence supérieure 8%, de préférence supérieure à 10%, de préférence supérieure à 12%, de préférence supérieure à 15%, de préférence supérieure à 18%, de préférence supérieure à 20%, de préférence supérieure à 24%, de préférence supérieure à 27% et/ou inférieure à 55%, de préférence inférieure à 50%, de préférence inférieure à 47% ;

- la teneur en zircone (phase $ZrO_2$) + hafnie (phase $HfO_2$) monocliniques, en pourcentage en masse sur la base de la quantité totale de phases cristallisées est inférieure à 45%, de préférence inférieure à 40%, de préférence inférieure à 35%, de préférence inférieure à 30%, de préférence inférieure à 25%, de préférence inférieure à 20%, de préférence inférieure à 15%, de préférence inférieure à 10%, de préférence inférieure à 5%, de préférence sensiblement nulle ;

- la teneur en corindon (phase $Al_2O_3$), en pourcentage en masse sur la base de la quantité totale de phases cristallisées, est supérieure à 5%, de préférence supérieure à 10% et/ou inférieure à 50%, de préférence inférieure ou égale à 40%, de préférence inférieure à 35%, de préférence inférieure à 30%, de préférence inférieure à 25%, de préférence inférieure à 20% ;

- la teneur en « autres phases cristallisées », c'est-à-dire en phases cristallisées autres que zircon, zircone stabilisée, hafnie stabilisée, zircone monoclinique, hafnie monoclinique et corindon, en pourcentage en masse sur la base de la quantité totale de phases cristallisées, est inférieure à 8%, de préférence inférieure à 6%, voire inférieure à 5%, voire inférieure à 4% ;

- les « autres phases cristallisées » sont, pour plus de 90%, plus de 95%, sensiblement 100% en masse, la mullite et/ou la cristoballite ;

- dans un mode de réalisation, la teneur en mullite est non détectable avec la méthode de mesure décrite pour les exemples ;

- la quantité massique de phase amorphe, c'est-à-dire vitreuse, en pourcentage en masse par rapport à la masse de la bille est inférieure à 25%, de préférence inférieure à 20%, de préférence inférieure à 17% ;

- la phase amorphe, exprimée sous une forme oxyde, comporte $MgO$ et $SiO_2$, et/ou $Y_2O_3$ et/ou $Al_2O_3$ et/ou $CaO$ et/ou $Na_2O$ et/ou $K_2O$ et/ou $P_2O_5$ ;

- la phase amorphe, exprimée sous une forme oxyde, comporte $MgO$ et $SiO_2$ et $Y_2O_3$ et $Al_2O_3$ et $Na_2O$ et $K_2O$ et $P_2O_5$ ;

- la porosité totale est inférieure à 6%, de préférence inférieure à 5,5%, de préférence inférieure à 5%, de préférence inférieure à 4,5%, voire inférieure à 4%, voire inférieure à 3%, voire inférieure à 2% ;

- la bille frittée présente une taille inférieure à 10 mm, de préférence inférieure à 2,5 mm et/ou supérieure à 0,005 mm, de préférence supérieure à 0,5 mm ;

- la bille frittée présente une sphéricité supérieure à 0,7, de préférence supérieure à 0,8, de préférence supérieure à 0,85, voire supérieure à 0,9 ;

- la densité de la bille frittée est supérieure à 4,2 g/cm$^3$, de préférence supérieure à 4,3 g/cm$^3$, voire supérieure à 4,4 g/cm$^3$ et/ou inférieure à 4,9 g/cm$^3$, de préférence inférieure à 4,8 g/cm$^3$.

Dans un mode de réalisation préféré, une bille frittée selon l'invention, préférée d'entre toutes, présente :

- les phases cristallisées suivantes, en pourcentages en masse sur la base des phases cristallisées et pour un total de 100% :

  - $31\% \leq$ zircon $\leq 68\%$ ;
  - $25\% \leq$ zircone stabilisée + hafnie stabilisée $\leq 47\%$ ;
  - zircone monoclinique + hafnie monoclinique $\leq 5\%$ ;
  - $4\% \leq$ corindon $\leq 25\%$ ;
  - phases cristallisées autres que zircon, zircone stabilisée, hafnie stabilisée, zircone monoclinique, hafnie monoclinique et corindon $< 5\%$ ;

- la composition chimique suivante, en pourcentages en masse sur la base des oxydes et pour un total de 100% :

  $50\% \leq ZrO_2+HfO_2 \leq 70\%$ ;
  $HfO_2 \leq 2\%$ ;
  $15\% \leq SiO_2 \leq 25\%$ ;
  $5\% \leq Al_2O_3 \leq 20\%$ ;
  $3\% \leq Y_2O_3 \leq 8,3\%$ ;
  $CeO_2 \leq 0,1\%$ ;
  $0,1\% \leq MgO \leq 1\%$ ;
  $0,3\% \leq CaO \leq 1\%$ ;
  moins de 3% d'oxydes autres que $ZrO_2$, $HfO_2$, $SiO_2$, $Al_2O_3$, MgO, CaO, $CeO_2$ et $Y_2O_3$.

Dans ce mode de réalisation, la bille frittée présente de préférence,

- moins de 25% de phase amorphe sur la base de la masse de la bille, et
- une porosité totale inférieure ou égale à 6%.

De préférence, la teneur en $CeO_2$ est sensiblement nulle.

L'invention concerne également une poudre de billes comprenant plus de 90%, de préférence plus de 95%, de préférence sensiblement 100%, en pourcentages en masse, de billes selon l'invention.

L'invention concerne également un procédé de fabrication de billes frittées selon l'invention comprenant les étapes successives suivantes :

  a) optionnellement, broyage d'une ou plusieurs poudres de matières premières, de préférence par cobroyage, et

  dosage desdites poudres de matières premières optionnellement broyées,
  de manière à obtenir un mélange particulaire présentant une taille médiane inférieure à 0,6 μm, et une composition adaptée pour obtenir, à l'issue de l'étape g), des billes frittées présentant une composition conforme à celle d'une bille frittée selon l'invention,
  le mélange particulaire comportant des particules de zircon, des particules de zircone stabilisée et des particules en un verre contenant MgO et/ou $SiO_2$, et/ou des particules en une vitrocéramique contenant MgO et/ou des particules en un composé comportant MgO et $SiO_2$, et/ou des poudres de précurseurs de ces oxydes,

  b) optionnellement, séchage dudit mélange particulaire,
  c) préparation d'une charge de départ à partir dudit mélange particulaire, optionnellement séché,
  d) mise en forme de la charge de départ sous la forme de billes crues,
  e) optionnellement, lavage,
  f) optionnellement, séchage,
  g) frittage à une température de frittage supérieure à 1330°C et inférieure à 1450°C de manière à obtenir des billes frittées.

L'invention concerne enfin l'utilisation d'une poudre de billes selon l'invention, en particulier fabriquées suivant un procédé selon l'invention, en tant qu'agents de broyage ; agents de dispersion en milieu humide ; agents de soutènement, en anglais *« propping agents »*, notamment pour empêcher la fermeture des fractures géologiques profondes créées dans les parois d'un puits d'extraction, en particulier de pétrole ; agents d'échange thermique, par exemple pour lit fluidisé ; ou pour le traitement de surfaces.

## Définitions

- Une somme de teneurs d'oxydes ou de phases cristallisées (c'est-à-dire une formule dans laquelle ces teneurs sont reliées par le signe « + ») n'implique pas que les deux oxydes ou phases cristallisées reliés par ce signe « + » sont nécessairement simultanément présents.
- Par « particule », on entend un produit solide individualisé dans une poudre.
- On appelle « frittage » la consolidation par traitement thermique à plus de 1100°C d'une particule crue (agglomérat granulaire), avec éventuellement une fusion, partielle ou totale, de certains de ses constituants (mais pas de tous ses constituants).

- Par « bille », on entend une particule présentant une sphéricité, c'est-à-dire un rapport entre son plus petit diamètre de Ferret et son plus grand diamètre de Ferret, supérieure à 0,6, quelle que soit la façon par laquelle cette sphéricité a été obtenue.

De préférence les billes selon l'invention présentent une sphéricité supérieure à 0,7.

- On appelle « taille » d'une bille, son plus petit diamètre de Ferret.
- On appelle « taille médiane » d'une poudre de particules de matière première, généralement notée $D_{50}$, la taille divisant les particules de cette poudre en première et deuxième populations égales en masse, ces première et deuxième populations ne comportant que des particules présentant une taille supérieure, ou inférieure respectivement, à la taille médiane. La taille médiane peut par exemple être évaluée à l'aide d'un granulomètre laser.
- Par « bille frittée », on entend une bille solide obtenue par frittage d'une bille crue.
- Par « impuretés », on entend les constituants inévitables, introduits nécessairement avec les matières premières. En particulier, dans un mode de réalisation, les composés faisant partie du groupe des oxydes, nitrures, oxynitrures, carbures, oxycarbures, carbonitrures de sodium et autres alcalins, fer, vanadium et chrome sont des impuretés. A titre d'exemples, on peut citer $Fe_2O_3$ ou $TiO_2$. Le carbone résiduel fait partie des impuretés de la composition des particules selon l'invention.
- Lorsqu'il est fait référence à $ZrO_2$ ou à ($ZrO_2+HfO_2$), il y a lieu de comprendre $ZrO_2$ et moins de 2% de $HfO_2$, en pourcentage massique sur la base de $ZrO_2+HfO_2$. En effet, un peu de $HfO_2$, chimiquement indissociable du $ZrO_2$ et présentant des propriétés semblables, est toujours naturellement présent dans les sources de $ZrO_2$ à des teneurs généralement inférieures à 2%, en pourcentage massique sur la base de $ZrO_2+HfO_2$. L'oxyde d'hafnium n'est pas considéré comme une impureté.
- Par « précurseur » d'un oxyde, on entend un constituant apte à fournir ledit oxyde lors de la fabrication d'une bille selon l'invention.
- Par « zircone stabilisée », on entend une zircone se présentant sous une forme cristallographique quadratique et/ou cubique.

Dans un souci de clarté, on utilise les termes « $ZrO_2$ », « $HfO_2$ », « $SiO_2$ » et « $Al_2O_3$ » pour désigner les teneurs de ces oxydes dans la composition, et « zircone », « hafnie » et « corindon » pour désigner des phases cristallisées de ces oxydes constituées de $ZrO_2$, de $HfO_2$, de $SiO_2$ et de $Al_2O_3$, respectivement. Ces oxydes peuvent cependant être également présents sous d'autres phases. En particulier $ZrO_2$ et $SiO_2$ peuvent être présents sous la forme de zircon ($ZrSiO_4$).

Tous les pourcentages de la présente description sont des pourcentages en masse sur la base des oxydes, sauf mention contraire.

Toutes les caractéristiques des billes peuvent être mesurées conformément aux protocoles décrits pour les exemples.

Les expressions « contenant un », « comprenant un » ou « comportant un » doivent être interprétées de manière large, non limitative, sauf indication contraire.

## Description détaillée

Pour fabriquer des billes frittées selon l'invention, on peut procéder suivant les étapes a) à g) décrites ci-dessus et détaillées ci-dessous.

**A l'étape a),** les poudres de matières premières peuvent être broyées individuellement ou, de préférence, cobroyées, si leur mélange dans des proportions adaptées pour la fabrication de billes selon l'invention ne conduit pas à un mélange particulaire présentant une taille médiane inférieure à 0,6 $\mu$m. Ce broyage peut être un broyage humide.

De préférence, un broyage ou un cobroyage est effectué de manière que la taille médiane dudit mélange particulaire soit inférieure à 0,5 $\mu$m, de préférence inférieure à 0,4 $\mu$m.

De préférence, les poudres utilisées, notamment les poudres de zircon $ZrSiO_4$, de zircone stabilisée $ZrO_2$, optionnellement d'alumine $Al_2O_3$, de verre contenant MgO et/ou $SiO_2$, et/ou de vitrocéramique contenant MgO, et/ou de composé comportant MgO et $SiO_2$, présentent chacune une taille médiane inférieure à 5 $\mu$m, voire inférieure à 3 $\mu$m, inférieure à 1 $\mu$m, inférieure à 0,7 $\mu$m, de préférence inférieure à 0,6 $\mu$m, de préférence inférieure à 0,5 $\mu$m, voire inférieure à 0,4 $\mu$m. Avantageusement, lorsque chacune de ces poudres présente une taille médiane inférieure à 0,6 $\mu$m, de préférence inférieure à 0,5 $\mu$m, voire inférieure à 0,4 $\mu$m, le broyage est optionnel.

Dans un procédé selon l'invention, le mélange particulaire comporte des poudres de zircon $ZrSiO_4$, de zircone stabilisée $ZrO_2$, de verre contenant MgO et/ou $SiO_2$, et/ou de vitrocéramique contenant MgO et/ou d'un composé comportant MgO et $SiO_2$, et optionnellement une poudre d'alumine $Al_2O_3$.

Ces poudres peuvent également être remplacées, au moins partiellement, par des poudres de précurseurs de ces oxydes, introduits dans des quantités équivalentes.

De préférence, la poudre de zircon utilisée présente une aire spécifique, calculée par la méthode BET, supérieure à 5 $m^2/g$, de préférence supérieure à 8 $m^2/g$, de préférence supérieure à 10 $m^2/g$, et/ou inférieure à 30 $m^2/g$. Avantageusement, le broyage à l'étape a), généralement en suspension, en est facilité. De plus, la température de frittage à l'étape f) peut être réduite.

De préférence, la poudre de zircone stabilisée utilisée présente une aire spécifique, calculée par la méthode BET, supérieure à 0,5 $m^2/g$, de préférence supérieure à 1 $m^2/g$, de préférence supérieure à 1,5 $m^2/g$, et/ou inférieure à 20 $m^2/g$, de préférence inférieure à 18 $m^2/g$, de préférence inférieure à 15 $m^2/g$. Avantageusement, le broyage à l'étape a), généralement en suspension, en est facilité. De plus, la température de frittage à l'étape f) peut être réduite.

De préférence, la poudre d'alumine utilisée présente une taille médiane inférieure à 7 $\mu$m, de préférence inférieure à 6 $\mu$m, voire inférieure à 3 $\mu$m, voire inférieure à 2 $\mu$m, voire inférieure à 1,5 $\mu$m.

**A l'étape b),** optionnelle, les poudres de matières premières broyées sont séchées, par exemple en étuve ou par atomisation, en particulier si elles ont été obtenues par broyage humide. De préférence, la température et/ou la durée de l'étape de séchage sont adaptées de manière à ce que l'humidité résiduelle des poudres de matières premières soit inférieure à 2%, voire inférieure à 1,5%.

**A l'étape c),** on prépare, de préférence à température ambiante, une charge de départ.

La charge de départ contient une poudre de zircon, c'est-à-dire de particules de $ZrSiO_4$, dans une quantité supérieure à 35%, de préférence supérieure à 40%, et/ou inférieure à 94%, de préférence inférieure à 90%, de préférence inférieure à 85%, de préférence inférieure à 80%, de préférence inférieure à 76%, de préférence inférieure à 72%, de préférence inférieure à 68% en masse sur la base de la masse de la charge de départ.

La charge de départ contient une poudre de particules comportant simultanément $ZrO_2$, $HfO_2$, et $Y_2O_3$ et $CeO_2$ en une quantité apte à stabiliser la zircone, de préférence en un mélange intime, de préférence des particules de zircone stabilisée, c'est-à-dire de particules de $ZrO_2$ stabilisée à $Y_2O_3$ et/ou $CeO_2$, dans une quantité supérieure à 5%, de préférence supérieure à 10%, de préférence supérieure à 15%, de préférence supérieure à 20%, de préférence supérieure à 25%, et/ou inférieure à 60%, de préférence inférieure à 55%, de préférence inférieure à 50%, en masse sur la base de la masse de la charge de départ.

De préférence, la poudre de zircone stabilisée est une poudre de zircone stabilisée à $Y_2O_3$ et ne contient sensiblement pas de $CeO_2$.

De préférence, la poudre de zircone stabilisée est stabilisée sous la forme cristallographique cubique. De façon surprenante, les inventeurs ont découvert que la résistance à l'usure des billes en est grandement améliorée.

Dans un premier mode de réalisation préféré, la poudre de zircone stabilisée est une poudre de zircone stabilisée sous la forme cristallographique cubique à l'aide d'$Y_2O_3$ et ne contient sensiblement pas de $CeO_2$. Dans ledit mode de réalisation, la teneur molaire en $Y_2O_3$ est comprise entre 7,5 mol% et 11 mol%, sur la base de la teneur totale en $ZrO_2$, $Y_2O_3$ et $CeO_2$.

Dans un deuxième mode de réalisation préféré, la charge de départ contient une poudre d'alumine, c'est-à-dire de particules d'$Al_2O_3$, dans une quantité supérieure à 5%, de préférence supérieure à 10%, et/ou inférieure à 45%, de préférence inférieure à 35%, de préférence inférieure à 30%, de préférence inférieure à 25%, de préférence inférieure à 20%, en masse sur la base de la masse de la charge de départ. De préférence, ladite poudre d'alumine est une poudre d'alumine réactive et/ou une poudre d'alumine calcinée et/ou une poudre d'alumine de transition. De préférence ladite poudre d'alumine est une poudre d'alumine réactive.

Dans un troisième mode de réalisation, la charge de départ comporte une poudre de silice, c'est-à-dire de particules de $SiO_2$, en une quantité de préférence supérieure à 0,5%, de préférence supérieure à 1%, et/ou inférieure à 6%, de préférence inférieure à 5%, de préférence inférieure à 4%, de préférence inférieure à 3%, de préférence inférieure à 2%, en pourcentage massique sur la base de la masse de la charge de départ.

La poudre de verre contenant MgO et/ou $SiO_2$, et/ou la poudre de vitrocéramique contenant MgO contiennent de préférence plus de 40%, de préférence plus de 50%, voire plus de 60%, voire plus de 70%, voire plus de 80% en masse de silice.

Le composé comportant MgO et $SiO_2$ comporte également de préférence $Al_2O_3$. De préférence, ledit composé est choisi parmi un talc, la cordiérite et leurs mélanges. De préférence, ledit composé est la cordiérite.

Dans un quatrième mode de réalisation, la charge de départ contient de la cordiérite en une quantité de préférence supérieure à 0,5%, de préférence supérieure à 1%, de préférence supérieure à 1,5%, et/ou inférieure à 15%, de préférence inférieure à 10%, de préférence inférieure à 8%, de préférence inférieure à 6%, de préférence inférieure à 5%, de préférence inférieure à 4%, de préférence inférieure à 3%, en pourcentage massique sur la base de la masse de la charge de départ.

Dans un cinquième mode de réalisation, la charge de départ contient une argile, de préférence en une quantité supérieure à 0,5%, de préférence supérieure à 1%, de préférence supérieure à 1,5%, et/ou inférieure à 5%, de préférence inférieure à 4%, de préférence inférieure à 3%.

Dans un mode de réalisation, les premier à cinquième modes de réalisation décrits immédiatement ci-dessus sont combinés.

Les poudres apportant les oxydes ou les précurseurs sont de préférence choisies de manière que la teneur totale en oxydes autres que $ZrO_2$, $HfO_2$, $SiO_2$, $Al_2O_3$, MgO, CaO, $CeO_2$ et $Y_2O_3$ soit inférieure à 5%, en pourcentage massique sur la base des oxydes.

De préférence, aucune matière première autre que les poudres de zircon $ZrSiO_4$, de zircone stabilisée $ZrO_2$, optionnellement d'alumine $Al_2O_3$, de verre contenant MgO et/ou $SiO_2$, et/ou de vitrocéramique contenant MgO, et/ou de composé comportant MgO et $SiO_2$ n'est introduite volontairement dans la charge de départ, les autres oxydes présents étant des impuretés.

La charge de départ peut en outre comporter un solvant, de préférence de l'eau, dont la quantité est adaptée à la méthode de mise en forme de l'étape d).

Comme cela est bien connu de l'homme du métier, la charge de départ est adaptée au procédé de mise en forme de l'étape d).

La mise en forme peut en particulier résulter d'un procédé de gélification. A cet effet, un solvant, de préférence de l'eau, est ajouté à la charge de départ de manière à réaliser une suspension.

La suspension présente de préférence une teneur massique en matière sèche comprise entre 50 et 70%.

La suspension peut encore comporter un ou plusieurs des constituants suivants :

- un dispersant, à raison de 0 à 10%, en pourcentage massique sur la base de la matière sèche ;
- un modificateur de tension de surface, à raison de 0 à 3%, en pourcentage massique sur la base de la matière sèche ;
- un agent gélifiant, ou « agent de gélification », à raison de 0 à 2%, en pourcentage massique sur la base de la matière sèche.

Les dispersants, modificateurs de tension de surface et agents gélifiants sont bien connus de l'homme du métier.

A titre d'exemples, on peut citer,

- comme dispersants, la famille des polyméthacrylates de sodium ou d'ammonium, la famille des polyacrylates de sodium ou d'ammonium, la famille des citrates, par exemple d'ammonium, la famille des phosphates de sodium, et la famille des esters de l'acide carbonique ;
- comme modificateurs de tension de surface, les solvants organiques tels que des alcools aliphatiques ;
- comme agents gélifiants, des polysaccharides naturels.

Les poudres d'oxydes et/ou de précurseurs sont de préférence ajoutées dans un mélange d'eau et de dispersants/défloculants dans un broyeur à boulets. Après agitation, on ajoute de l'eau dans laquelle a été préalablement dissout un agent gélifiant de manière à obtenir une suspension.

Si la mise en forme résulte d'une extrusion, des polymères thermoplastiques ou des polymères thermodurcissables peuvent être ajoutés à la charge de départ.

**A l'étape d),** tout procédé conventionnel de mise en forme connu pour la fabrication de billes frittées, peut être mis en oeuvre.

Parmi ces procédés, on peut citer :

- les procédés de granulation, mettant par exemple en oeuvre des granulateurs, des granulateurs à lit fluidisé, ou des disques de granulation,
- les procédés de gélification,
- les procédés de moulage par injection ou extrusion, et
- les procédés de pressage.

Dans un procédé de gélification, des gouttes de la suspension décrite ci-dessus sont obtenues par écoulement de la suspension à travers un orifice calibré. Les gouttes sortant de l'orifice tombent dans un bain d'une solution de gélification (électrolyte adapté pour réagir avec l'agent gélifiant) où elles durcissent après avoir recouvré une forme sensiblement sphérique.

**A l'étape e),** optionnelle, les billes crues obtenues lors de l'étape précédente sont lavées, par exemple à l'eau.

**A l'étape f),** optionnelle, les billes crues, éventuellement lavées, sont séchées, par exemple à l'étuve.

**A l'étape g),** les billes crues, éventuellement lavées et/ou séchées, sont frittées. De préférence, le frittage s'effectue sous air, de préférence dans un four électrique, de préférence à pression atmosphérique.

Le frittage à l'étape g) est effectué à une température supérieure à 1330°C, de préférence supérieure à 1340°C, de préférence supérieure à 1350°C, de préférence supérieure à 1360°C, de préférence supérieure à 1370°C, et inférieure à 1450°C, de préférence inférieure à 1430°C, de préférence inférieure à 1410°C, de préférence inférieure à 1400°C, de préférence inférieure à 1390°C. Une température de frittage égale à 1375°C est bien adaptée. Une température de frittage inférieure à 1330°C ne permet pas d'obtenir une particule présentant une porosité totale inférieure ou égale à 6%. A l'inverse, une température de frittage supérieure à 1450°C entraîne une dissociation trop importante du zircon, ce qui est préjudiciable à la résistance à l'usure.

De préférence, la durée de frittage est comprise entre 2 et 5 heures. Une durée de frittage égale à 4 heures est bien adaptée.

Les billes frittées obtenues présentent de préférence un plus petit diamètre supérieur à 0,005 mm, de préférence supérieur à 0,5 mm et inférieur à 10 mm, de préférence inférieur à 2,5 mm.

Si les relations (1) et (2) ne sont pas respectées, la résistance à l'usure n'est pas améliorée. Ces relations permettent de définir une condition sur la quantité totale de $CeO_2$ et d'$Y_2O_3$ en fonction de la quantité de $ZrO_2$ apportée sensiblement exclusivement par la zircone stabilisée.

Ainsi, la relation (1) exprime que $Y_2O_3$ et $CeO_2$ sont présents en une quantité adaptée pour théoriquement stabiliser toute la zircone présente, et la relation (2) exprime l'absence de composés différents de la zircone stabilisée et comportant, sous forme oxyde, du zirconium et de l'yttrium ou comportant, sous forme oxyde, du zirconium et du cérium.

Les billes frittées selon l'invention sont particulièrement bien adaptées comme agents de broyage ou comme agents de dispersion en milieu humide, ainsi que pour le traitement de surfaces. L'invention concerne donc également l'utilisation d'une poudre de billes selon l'invention, ou de billes fabriquées suivant un procédé selon l'invention, en tant qu'agents de broyage, ou agents de dispersion en milieu humide.

Les propriétés des billes selon l'invention, notamment leur résistance mécanique, leur densité, ainsi que leur facilité d'obtention, les rendent aptes à d'autres applications, notamment comme agents de soutènement ou d'échange thermique, ou encore pour le traitement de surfaces (par projection des billes selon l'invention en particulier).

L'invention concerne donc encore un dispositif choisi parmi une suspension, un broyeur, un appareil de traitement de surfaces et un échangeur thermique, ledit dispositif comportant une poudre de billes selon l'invention.

## Exemples

Les exemples non limitatifs suivants sont donnés dans le but d'illustrer l'invention.

### Protocoles de mesure

Les méthodes suivantes ont été utilisées pour déterminer certaines propriétés de différents mélanges de billes frittées. Elles permettent une excellente simulation du comportement réel en service dans l'application de microbroyage.

Pour déterminer la **sphéricité** d'une bille, les plus petit et plus grand diamètres de Ferret sont mesurés sur un Camsizer XT commercialisé par la société Horiba.

Pour déterminer la **résistance à l'usure dite « planétaire »,** 20 ml (volume mesuré à l'aide d'une éprouvette graduée) de billes à tester de taille comprise entre 1,6 et 2,0 mm, sont pesées (masse $m_0$) et introduites dans un des 4 bols revêtus d'alumine frittée dense, de contenance de 125 ml, d'un broyeur planétaire rapide du type PM400 de marque RETSCH. Sont ajoutés dans le même bol contenant déjà les billes, 2,2 g de carbure de silicium de marque Presi (présentant une taille médiane D50 de 23 $\mu$m) et 40 ml d'eau. Le bol est refermé et mis en rotation (mouvement planétaire) à 400 tr/min avec inversion du sens de rotation toutes les minutes pendant 1h30. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100 °C pendant 3h puis pesées (masse $m_1$). Lesdites billes (masse $m_1$) sont à nouveau introduites dans un des bols avec une suspension de SiC (même concentration et quantité que précédemment) et subissent un nouveau cycle de broyage, identique au précédent. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100 °C pendant 3h puis pesées (masse $m_2$). Lesdites billes (masse $m_2$) sont à nouveau introduites dans un des bols avec une suspension de SiC (même concentration et quantité que précédemment) et subissent un nouveau cycle de broyage, identique au précédent. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100 °C pendant 3h puis pesées (masse $m_3$).

L'usure planétaire (UP) est exprimée en pourcentage (%) et est égale à la perte de masse des billes ramenée à la masse initiale des billes, soit : $100(m_0-m_3) / (m_0)$ ; le résultat UP est donné dans le tableau 1.

On considère que les résultats sont particulièrement satisfaisants si les produits présentent une amélioration de la résistance à l'usure planétaire (UP) d'au moins 15 % par rapport à celle de l'exemple 1, exemple de référence.

**La quantification des phases cristallisées** présentes dans les billes frittées selon l'invention est effectuée à partir d'échantillons de billes polies préparés selon la méthode suivante : pour chacun des exemples, une monocouche, sensiblement continue, de billes présentant une taille comprise entre 1,6 et 2 mm, est partiellement noyée dans de la résine acrylique, à une température égale à 180°C.

Le diamètre extérieur du bloc de résine contenant les billes est égal à 25 mm.

Le bloc est poli à l'aide d'un papier abrasif présentant une taille de grains égale à 65 $\mu$m, jusqu'à pouvoir observer sensiblement le centre des billes. Le bloc est ensuite poli plus finement, l'avant dernière étape de polissage étant réalisée avec une préparation diamantée Mecaprex LD32-E 1$\mu$m commercialisée par la société PRESI, et la dernière étape de polissage étant réalisée à l'aide d'une solution de silice colloïdale 0,04 $\mu$m.

Les phases cristallisées présentes dans les billes frittées selon l'invention sont mesurées par diffraction X, par exemple au moyen d'un appareil du type diffractomètre X'Pert PRO de la société Panalytical pourvu d'un tube DX en cuivre. L'acquisition du diagramme de diffraction est réalisée à partir de cet équipement, sur un domaine angulaire 2$\theta$ compris entre 5° et 80°, avec un pas de 0,017°, et un temps de comptage de 150s/pas. L'optique avant comporte une fente de divergence programmable utilisée fixe de 1/4°, des fentes de Soller de 0,04 rad, un masque égal à 10mm et une fente anti diffusion fixe de 1/2°. L'échantillon est en rotation sur lui-même afin de limiter les orientations préférentielles. L'optique arrière comporte une fente anti diffusion programmable utilisée fixe de 1/4°, une fente de Soller de 0,04 rad et un filtre Ni.

Les diagrammes de diffraction ont ensuite été analysés qualitativement à l'aide du logiciel EVA et de la base de données ICDD2016.

Une fois les phases présentes mises en évidence, les diagrammes de diffraction ont été analysés quantitativement avec le logiciel High Score Plus par affinement Rietveld selon la stratégie suivante :

- Un affinement du signal de fond est réalisé à l'aide de la fonction « treatment », « détermine background » avec les choix suivants : « bending factor » égal à 0 et « granularity » égal à 40. A noter que si un halo induit par la résine est observé, il est possible de tracer manuellement la ligne de base point par point ;

- Classiquement, les fiches ICDD des phases présentes mises en évidence et quantifiables sont sélectionnées, et donc prises en compte dans l'affinement ;

- Un affinement automatique est ensuite réalisé en sélectionnant le signal de fond déterminé précédemment « use available background » et en sélectionnant le mode « automatic : option phase fit-default Rietveld » ;

- Un affinement manuel du paramètre « B overall » de toutes les phases sélectionnées est ensuite effectué de manière simultanée ;

- Enfin, un affinement manuel simultané du paramètre W de Caglioti des phases zircone quadratique et zircone cubique est réalisé si la fonction automatique ne l'a pas effectué. Dans ce cas, « W » est sélectionné pour lesdites phases de zircone et l'affinement est à nouveau effectué. Les résultats ne sont conservés que si le paramètre « Goodness of fit » du deuxième affinement est inférieur à celui du premier affinement.

La quantité de **phase amorphe** présente dans les billes frittées selon l'invention est mesurée par diffraction X, par exemple au moyen d'un appareil du type diffractomètre X'Pert PRO de la société Panalytical pourvu d'un tube DX en cuivre. L'acquisition du diagramme de diffraction est réalisée à partir de cet équipement, de la même manière que pour la détermination des phases cristallisées présentes dans les billes, l'échantillon analysé se présentant sous la forme d'une poudre. La méthode appliquée consiste en l'ajout d'une quantité connue d'un étalon totalement cristallisé, dans le cas présent une poudre d'oxyde de zinc, ZnO en une quantité égale à 20%, sur la base de la masse d'oxyde de zinc et d'échantillon de billes frittées broyées selon l'invention. La taille maximale de la poudre d'oxyde de zinc est égale à 1 $\mu$m et les billes selon l'invention sont broyées de manière à obtenir une poudre présentant une taille maximale inférieure à 40 $\mu$m.

La taille maximale des particules de ZnO est entrée dans le logiciel High Score Plus de manière à limiter les effets de micro-absorption.

Le taux de phase amorphe, en pourcentage, se calcule à l'aide de la formule suivante, $Q_{ZnO}$ étant la quantité de ZnO déterminée à partir du diagramme de diffraction :

$$\text{Taux de phase amorphe} = 100*(100/(100-20))*(1-(20/Q_{ZnO})).$$

Par exemple, si $Q_{ZnO}$ est égal à 22%, alors le taux de phase amorphe est égal à $100*(100/(100-20))*(1 - (20/22)) = 11,4\%$.

La **porosité totale,** en %, est évaluée par la formule suivante :

$$\text{Porosité totale} = 100*(1 - (d_{billes}/d_{billes\ broyées})),\ \text{avec}$$

- $d_{billes}$, la densité sur billes non broyées obtenues à l'aide d'un pycnomètre hélium (AccuPyc 1330 de la société Micromeritics[®]), selon une méthode basée sur la mesure du volume d'hélium déplacé, et
- $d_{billes\ broyées}$ est la densité sur poudre provenant du broyage des billes réalisé avec un broyeur à sec de type annulaire de marque Aurec pendant 40 s et suivi d'un tamisage pour ne conserver pour la mesure que la poudre passant à travers un tamis de 160 $\mu$m.

Protocole de fabrication

Des billes frittées ont été préparées à partir :

- d'une poudre de zircon, présentant une aire spécifique de l'ordre de 8 $m^2$/g, une taille médiane égale à 1,5 $\mu$m et une teneur totale en oxydes autres que $ZrO_2$ et $SiO_2$ égale à 1,1%,

- d'une poudre de cordiérite de pureté supérieure à 95% et de taille médiane inférieure à 63 $\mu$m,

- d'une poudre d'argile de taille médiane inférieure à 53 $\mu$m, présentant une perte au feu réalisée à 1000°C comprise entre 10% et 15% et présentant une teneur totale $SiO_2$ + $Al_2O_3$ supérieure à 82%,

- d'une poudre de silice de pureté supérieure à 98,5% et présentant une taille médiane égale à 1,5 $\mu$m, et, en fonction des exemples réalisés,

- d'une poudre d'alumine de pureté égale à 99,5% et de taille médiane inférieure à 5 $\mu$m,

- d'une poudre d'oxyde de cérium de pureté supérieure à 99,5% et présentant une taille médiane égale à 2,8 $\mu$m,

- d'une poudre de zircone non stabilisée CZ-5, commercialisée par Saint-Gobain ZirPro et se présentant sous la forme cristallographique monoclinique,

- d'une poudre de zircone stabilisée CY3Z commercialisée par Saint-Gobain ZirPro, présentant une teneur molaire en $Y_2O_3$ égale à 3% et se présentant majoritairement sous une forme cristallographique quadratique,

- et d'une poudre de zircone stabilisée TZ-10Y, commercialisée par TOSOH, présentant une teneur molaire en $Y_2O_3$ égale à 10% et se présentant sous une forme cristallographique sensiblement entièrement cubique.

Le tableau 1 résume les charges de départ des exemples.

Ces poudres ont été mélangées puis cobroyées en milieu humide jusqu'à obtention d'un mélange particulaire présentant une taille médiane inférieure à 0,4 $\mu$m. Le mélange particulaire a ensuite été séché.

Une charge de départ consistant en une suspension aqueuse comportant, en pourcentages en pourcentage massique sur la base de la matière sèche, 0,5% d'un dispersant de type acide carboxylique, 0,6% d'un dispersant de type phosphate de sodium et 0,4% d'un agent gélifiant, à savoir un polysaccharide de la famille des alginates, a ensuite été préparée à partir de ce mélange particulaire.

Un broyeur à boulets a été utilisé pour cette préparation de manière à obtenir une bonne homogénéité de la charge de départ : Une solution contenant l'agent gélifiant a d'abord été formée. Successivement on a ajouté dans de l'eau, le mélange particulaire et les dispersants. La solution contenant l'agent gélifiant a ensuite été ajoutée. Le mélange ainsi obtenu a été agité pendant 8 heures. La taille des particules a été contrôlée par sédigraphie à l'aide d'un sédigraphe Sedigraph 5100 commercialisé par la société Micromeritics[®] (taille médiane < 0,4$\mu$m), et de l'eau a été ajoutée en une quantité déterminée pour obtenir une suspension aqueuse à 68% en matière sèche et une viscosité, mesurée au viscosimètre Brookfield à l'aide du mobile LV3 à une vitesse égale à 20 tours/minutes, inférieure à 5000 centipoises. Le pH de la suspension était alors d'environ 9 après ajustement à l'aide d'une base forte.

La suspension a été forcée à travers un trou calibré et à un débit permettant d'obtenir après frittage des billes d'environ 1,6 mm à 2,0 mm dans le cadre de cet exemple. Les gouttes de suspension tombaient dans un bain de gélification à base d'un électrolyte (sel de cation divalent), réagissant avec l'agent gélifiant. Les billes crues ont été collectées, lavées, puis séchées à 80°C pour éliminer l'humidité. Les billes ont ensuite été transférées dans un four de frittage où elles ont été portées, à une vitesse de 100°C/h, jusqu'à la température égale à 1375°C. A la fin d'un palier de 4 heures à cette température, la descente en température a été effectuée par refroidissement naturel.

Résultats

Les résultats obtenus sont résumés dans le tableau 2.

Tableau 1

| Exemples | 1 (*) | 2 | 3 | 4 | 5(*) | 6 | 7 | 8 | 9 |
|---|---|---|---|---|---|---|---|---|---|
| Composition du mélange particulaire | | | | | | | | | |
| Poudre de zircon | - | 60,2 | 50,2 | 45,2 | 55,2 | 55,2 | 84,2 | 25,2 | 45,2 |
| Poudre de zircone CZ-5 | - | - | - | - | 34 | - | - | - | 17,2 |
| Poudre de zircone stabilisée CY3Z | - | - | - | - | - | 34 | - | - | - |
| Poudre de zircone stabilisée TZ-10Y | - | 34 | 34 | 34 | - | - | 5 | 34 | 11,8 |
| Poudre d'alumine | - | - | 10 | 15 | 5 | 5 | 5 | 35 | 15 |
| Poudre de silice | | 1,4 | 1,4 | 1,4 | 1,4 | 1,4 | 1,4 | 1,4 | 1,4 |
| Poudre de cordiérite | - | 1,9 | 1,9 | 1,9 | 1,9 | 1,9 | 1,9 | 1,9 | 1,9 |
| Poudre d'argile | - | 2,5 | 2,5 | 2,5 | 2,5 | 2,5 | 2,5 | 2,5 | 2,5 |
| Poudre d'oxyde de cérium | - | - | - | - | - | - | - | - | 5 |
| (*) : hors invention | | | | | | | | | |

Tableau 2

| Exemples | 1 (*) | 2 | 3 | 4 | 5(*) | 6 | 7 | 8 | 9 |
|---|---|---|---|---|---|---|---|---|---|
| Analyse chimique, en pourcentages en masse sur la base des oxydes | | | | | | | | | |
| $ZrOz + HfO_2$ (%) | 57 | 66,7 | 59,6 | 56,5 | 69,8 | 67,3 | 59,2 | 44,7 | 54,3 |
| $SiO_2$ (%) | 37 | 23,8 | 20,4 | 18,5 | 21,4 | 21,3 | 30,5 | 11,6 | 19,2 |
| $Al_2O_3$ (%) | 3 | 1,8 | 11,9 | 16,8 | 6,7 | 6,6 | 6,7 | 36,3 | 17,2 |
| $Y_2O_3$ (%) | - | 6 | 5,9 | 5,9 | 0,1 | 1,9 | 1,1 | 5,5 | 2,2 |
| CaO (%) | - | 0,7 | 0,6 | 0,6 | 0,8 | 0,9 | 1 | 0,6 | 0,6 |
| $CeO_2$ (%) | | - | - | - | - | - | - | - | 5,4 |
| MgO (%) | 0,4 | 0,2 | 0,2 | 0,2 | 0,2 | 0,2 | 0,2 | 0,2 | 0,2 |
| Autres oxydes (%) | 2,6 | 0,8 | 1,4 | 1,5 | 1,0 | 1,8 | 1,3 | 1,1 | 0,9 |
| dont $P_2O_5$ (%) | - | 0,5 | 0,5 | 0,5 | 0,6 | 0,6 | 0,5 | 0,5 | 0,4 |
| Z | - | 30,0 | 29,3 | 30,5 | 27,7 | 29,6 | 8,2 | 32,4 | 32,1 |
| $CeO_2 + 3,76*Y_2O_3 \geq 0,128*Z$ ? | - | oui | oui | oui | non | oui | oui | oui | oui |
| $CeO_2 + 1,3*Y_2O_3 \leq 0,318*Z$ ? | - | oui | oui | oui | oui | oui | oui | oui | oui |
| Phases cristallisées, en % en masse sur la base de la masse des phases cristallisées | | | | | | | | | |
| Zircon (%) | 100 | 68 | 57 | 50 | 66 | 59 | 85 | 28 | 47 |
| Zircone monoclinique (%) | - | - | - | - | 30 | 26 | 5 | - | 10 |
| Zircone stabilisée (%) | - | 32 | 31 | 32 | - | 9 | 4 | 34 | 24 |
| Corindon (%) | 0 | - | 12 | 18 | 4 | 6 | 6 | 38 | 19 |
| Autres phases cristallisées (%) | - | - | - | - | - | - | - | - | - |

(suite)

| | Caractéristiques | | | | | | | | |
|---|---|---|---|---|---|---|---|---|---|
| Porosité totale (%) | - | 0,8 | 1 | 1,5 | 2 | 1,2 | 1,5 | 5,9 | 1,1 |
| Densité billes | 4,20 | 4,70 | 4,58 | 4,52 | 4,63 | 4,58 | 4,30 | 4,23 | 4,5 |
| Usure planétaire UP (en %) | 4,5 | 1,9 | 1,6 | 1,4 | 15,9 | 2,8 | 3,4 | 0,9 | 1,4 |
| Amélioration UP% / exemple 1 | - | 58% | 64% | 69% | -253% | 38% | 24% | 80% | 69% |
| (*) : hors invention | | | | | | | | | |

Les poudres de billes des exemples présentent une sphéricité moyenne supérieure à 0,9.

Les billes des exemples 2 à 9 présentent une quantité de phase amorphe inférieure à 20% en masse.

Les billes de référence de l'exemple 1, hors invention, sont des billes frittées de zircon couramment utilisées dans les applications de broyage, dont la composition est proche de celle de l'exemple 4 de US 2004/007789.

$$Z=Z_4+Z_5+Z_6-(0,67*Z_1*(Z_4+Z_5+Z_6)/(0,67*Z_1+Z_2+Z_3))$$

Par exemple, pour l'exemple 2, Z est déterminé de la manière suivante :

$$Z=0,667+0,06+0-(0,67*0,68*(0,667+0,06+0)/(0,67*0,68+0,32+0))=0,3, \text{ soit } 30\%.$$

La vérification des conditions (1) et (2) est déterminée de la manière suivante :
$0,128*Z$ est égal à $0,128*30=3,84$ et $0,318*Z$ est égal à $0,318*30=9,54$.

$CeO_2 + 3,76*Y_2O_3$ est égal à $0 + 3,76*6 = 22,56$, qui est bien supérieur à 3,84 ($0,128*Z$) : la condition (1) est bien vérifiée pour l'exemple 2.

$CeO_2 + 1,3*Y_2O_3$ est égal à $0 + 1,3*6 = 7,8$, qui est bien inférieur à 9,54 ($0,318*Z$) : la condition (2) est bien vérifiée pour l'exemple 2.

Une comparaison de l'exemple 1 hors invention, et de l'exemple 2 selon l'invention, montre une diminution de l'usure planétaire UP de 58%, notamment obtenue grâce à l'ajout de zircone stabilisée à $Y_2O_3$ et sensiblement entièrement cubique.

Une comparaison de l'exemple 1 hors invention, et de l'exemple 6 selon l'invention, montre une diminution de l'usure planétaire UP de 38%, notamment obtenue grâce à l'ajout de zircone stabilisée se présentant majoritairement sous une forme cristallographique quadratique.

Une comparaison des exemples 1, 2 et 6 montre que de façon surprenante, il est préférable d'ajouter une zircone stabilisée sensiblement entièrement cubique plutôt qu'une zircone stabilisée se présentant majoritairement sous une forme cristallographique quadratique : l'usure est égale à 1,9% et à 2,8%, respectivement, comparativement à l'usure de l'exemple 1 égale à 4,5%.

Une comparaison des exemples selon l'invention 2 à 4 montre une diminution de l'usure UP et une diminution de la densité en fonction de l'augmentation d'un ajout d'alumine.

Une comparaison des exemples 1 et 5 hors invention, montre que l'usure UP est dégradée par un ajout de 34% d'une poudre de zircone non stabilisée.

Une comparaison des exemples 1 et 7, 8 et 9 montre une diminution de l'usure UP pour des billes selon l'invention présentant une teneur en $SiO_2$ égale à 30,5%, présentant une teneur en $Al_2O_3$ égale à 36,3%, et comportant une zircone stabilisée à $Y_2O_3$ et $CeO_2$, respectivement.

Les exemples montrent que, de façon surprenante, les billes selon l'invention testées présentent des performances remarquables par rapport aux billes de référence.

## Revendications

1. Bille frittée présentant :

    - les phases cristallisées suivantes, en pourcentages en masse sur la base des phases cristallisées et pour un total de 100% :

- 25% ≤ zircon, ou « $Z_1$ », ≤ 94% ;
- 4% ≤ zircone stabilisée + hafnie stabilisée, ou « $Z_2$ », ≤ 61% ;
- zircone monoclinique + hafnie monoclinique, ou « $Z_3$ », ≤ 50% ;
- corindon ≤ 57% ;
- phases cristallisées autres que $Z_1$, $Z_2$, $Z_3$ et corindon < 10% ;

- la composition chimique suivante, en pourcentages en masse sur la base des oxydes et pour un total de 100% :

33% ≤ $ZrO_2$ + $HfO_2$, ou « $Z_4$ », ≤ 83,4% ;
$HfO_2$ ≤ 2% ;
10,6% ≤ $SiO_2$ ≤ 34,7% ;
$Al_2O_3$ ≤ 50% ;
0% ≤ $Y_2O_3$, ou « $Z_5$ » ;
0% ≤ $CeO_2$, ou « $Z_6$ » ;
0,3% ≤ $CeO_2$ + $Y_2O_3$ ≤ 19%, pourvu que

(1) $CeO_2$ + 3,76*$Y_2O_3$ ≥ 0,128*Z, et
(2) $CeO_2$ + 1,3*$Y_2O_3$ ≤ 0,318*Z,

avec $Z = Z_4 + Z_5 + Z_6 - (0,67*Z_1*(Z_4+Z_5+Z_6)/(0,67*Z_1+Z_2+Z_3))$ ;
$MgO$ ≤ 5% ;
$CaO$ ≤ 2% ;
oxydes autres que $ZrO_2$, $HfO_2$, $SiO_2$, $Al_2O_3$, $MgO$, $CaO$, $CeO_2$ et $Y_2O_3$ < 5,0%.

**2.** Bille frittée selon la revendication précédente dans laquelle $Al_2O_3$ ≤ 35%, 37% ≤ $ZrO_2$ + $HfO_2$ et 12,6% ≤ $SiO_2$, en pourcentages en masse sur la base des oxydes, et présentant une teneur en corindon inférieure ou égale à 40% et une teneur en zircon supérieure ou égale à 31%, en pourcentages en masse sur la base de la quantité totale de phases cristallisées.

**3.** Bille frittée selon l'une quelconque des revendications précédentes, dans laquelle 50% ≤ $ZrO_2$+$HfO_2$ et/ou $SiO_2$ > 14% et/ou $Al_2O_3$ > 5% et/ou $MgO$ > 0,1% et/ou $CaO$ > 0,1%.

**4.** Bille frittée selon l'une quelconque des revendications précédentes, dans laquelle 25% > $Al_2O_3$ > 10% et/ou 1,0% > $MgO$ > 0,15% et/ou 1,0% > $CaO$ > 0,2%, et/ou dans laquelle la teneur $CeO_2$ + $Y_2O_3$ est supérieure à 2,2%, en pourcentages en masse sur la base des oxydes.

**5.** Bille frittée selon l'une quelconque des revendications précédentes, dans laquelle $CeO_2$ + 2,39*$Y_2O_3$ ≥ 0,212*Z.

**6.** Bille frittée selon l'une quelconque des revendications précédentes, dans laquelle la teneur $CeO_2$ + $Y_2O_3$ est inférieure à 15,5%, en pourcentages en masse sur la base des oxydes.

**7.** Bille frittée selon l'une quelconque des revendications précédentes, dans laquelle $CeO_2$ + 1,4*$Y_2O_3$ ≤ 0,259*Z.

**8.** Bille frittée selon l'une quelconque des revendications précédentes, dans laquelle la teneur $CeO_2$ est inférieure à 0,2%, de préférence inférieure à 0,1%.

**9.** Bille frittée selon l'une quelconque des revendications précédentes, dans laquelle la teneur en oxydes autres que $ZrO_2$, $HfO_2$, $SiO_2$, $Al_2O_3$, $Y_2O_3$, $CeO_2$, $CaO$, $MgO$ est inférieure à 2%, en pourcentages en masse sur la base des oxydes, et/ou la teneur en oxydes représente plus de 99% de la masse totale de ladite bille.

**10.** Bille frittée selon l'une quelconque des revendications précédentes, présentant une teneur en zircon supérieure à 35% et inférieure à 90%, et/ou une teneur en zircone + hafnie stabilisées supérieure à 10% et inférieure à 50%, et/ou teneur en zircone + hafnie monocliniques inférieure à 35%, et/ou une teneur en corindon supérieure à 10% et inférieure à 25%, en pourcentage en masse sur la base de la quantité totale de phases cristallisées.

**11.** Bille frittée selon la revendication précédente, dans laquelle la teneur en zircon est inférieure à 68%, en pourcentage en masse sur la base de la quantité totale de phases cristallisées.

**12.** Bille frittée selon l'une quelconque des revendications précédentes, présentant une quantité massique de phase amorphe, en pourcentage en masse par rapport à la masse de la bille, inférieure à 25%.

**13.** Bille frittée selon la revendication immédiatement précédente, dans laquelle la phase amorphe, exprimée sous une forme oxyde, comporte

- MgO et $SiO_2$, et/ou
- $Y_2O_3$ et/ou
- $Al_2O_3$ et/ou
- CaO et/ou
- $Na_2O$ et/ou
- $K_2O$ et/ou
- $P_2O_5$.

**14.** Bille frittée selon l'une quelconque des revendications précédentes, présentant une porosité totale inférieure à 6%, une sphéricité supérieure à 0,7 et une taille inférieure à 10 mm et supérieure à 0,005 mm.

**15.** Dispositif choisi parmi une suspension, un broyeur, un appareil de traitement de surfaces et un échangeur thermique, ledit dispositif comportant une poudre comprenant plus de 90% en pourcentages en masse, de billes selon l'une quelconque des revendications précédentes.

**16.** Procédé de fabrication de billes frittées selon l'une quelconque des revendications 1 à 14, comprenant les étapes successives suivantes :

a) optionnellement, broyage d'une ou plusieurs poudres de matières premières, de préférence par cobroyage, et

dosage desdites poudres de matières premières optionnellement broyées,
de manière à obtenir un mélange particulaire présentant une taille médiane inférieure à 0,6 $\mu$m, et une composition adaptée pour obtenir, à l'issue de l'étape g), des billes frittées présentant une composition conforme à celle d'une bille frittée selon l'une quelconque des revendications 1 à 14,
le mélange particulaire comportant

- des particules de zircon et des particules de zircone stabilisée et
- des particules en un verre contenant MgO et/ou $SiO_2$, et/ou des particules en une vitrocéramique contenant MgO et/ou des particules en un composé comportant MgO et $SiO_2$,

b) optionnellement, séchage dudit mélange particulaire,
c) préparation d'une charge de départ à partir dudit mélange particulaire, optionnellement séché,
d) mise en forme de la charge de départ sous la forme de billes crues,
e) optionnellement, lavage des billes crues,
f) optionnellement, séchage des billes crues, optionnellement lavées,
g) frittage des billes crues, optionnellement séchées et/ou lavées, à une température de frittage supérieure à 1330°C et inférieure à 1450°C de manière à obtenir des billes frittées.

**Patentansprüche**

**1.** Gesinterte Kugel, die Folgendes aufweist:

- die folgenden kristallinen Phasen, in Gewichtsprozent, bezogen auf kristalline Phasen und auf eine Gesamtmenge von 100 %:

- 25 % $\leq$ Zirkon, oder "$Z_1$", $\leq$ 94 %;
- 4 % $\leq$ stabilisiertes Zirkonoxid + stabilisiertes Hafniumoxid, oder "$Z_2$", $\leq$ 61 %;
- monoklines Zirkonoxid + monoklines Hafniumoxid, oder "$Z_3$", $\leq$ 50 %;
- Korund $\leq$ 57 %; %;
- von $Z_1$, $Z_2$, $Z_3$ und Korund verschiedene kristalline Phasen $\leq$ 10 %;

- die folgende chemische Zusammensetzung, in Gewichtsprozent, bezogen auf Oxide, und für eine Summe von 100 %:

$33\ \% \leq ZrO_2 + HfO_2$, oder "$Z_4$", $\leq 83,4\ \%$;
$HfO_2 \leq 2\ \%$;
$10, 6\ \% \leq SiO_2 \leq 34,7\ \%$;
$Al_2O_3 \leq 50\ \%$;
$0\ \% \leq Y_2O_3$, oder "$Z_5$";
$0\ \% \leq CeO_2$, oder "$Z_6$";
$0,3\ \% \leq CeO_2 + Y_2O_3 \leq 19\ \%$, mit der Maßgabe, dass

(1) $CeO_2 + 3, 76 * Y_2O_3 \geq 0,128 * Z$ und
(2) $CeO_2 + 1,3 * Y_2O_3 \leq 0,318 * Z$,

mit $Z = Z_4 + Z_5 + Z_6 - (0,67 * Z_1 * (Z_4 + Z_5 + Z_6) / (0, 67 * Z_1 + Z_2 + Z_3))$;
$MgO \leq 5\ \%$;
$CaO \leq 2\ \%$;
von $ZrO_2$, $HfO_2$, $SiO_2$, $Al_2O_3$, $MgO$, $CaO$, $CeO_2$ und $Y_2O_3$ verschiedene Oxide $\leq 5,0\ \%$.

2. Gesinterte Kugel nach dem vorhergehenden Anspruch, wobei $Al_2O_3 \leq 35\ \%$, $37\ \% \leq ZrO_2 + HfO_2$ und $12,6\ \% \leq SiO_2$, in Gewichtsprozent, bezogen auf Oxide, und die einen Korundgehalt von weniger als oder gleich 40 % und einen Zirkongehalt von mehr als oder gleich 31 %, in Gewichtsprozent, bezogen auf die Gesamtmenge von kristallinen Phasen, aufweist.

3. Gesinterte Kugel nach einem der vorhergehenden Ansprüche, wobei $50\ \% \leq ZrO_2 + HfO_2$ und/oder $SiO_2 > 14\ \%$ und/oder $Al_2O_3 > 5\ \%$ und/oder $MgO > 0,1\ \%$ und/oder $CaO > 0,1\ \%$.

4. Gesinterte Kugel nach einem der vorhergehenden Ansprüche, wobei $25\ \% > Al_2O_3 > 10\ \%$ und/oder $1,0\ \% > MgO > 0,15\ \%$ und/oder $1,0\ \% > CaO > 0,2\ \%$, und/oder wobei der Gehalt an $CeO_2 + Y_2O_3$ größer als 2,2 %, in Gewichtsprozent, bezogen auf Oxide, ist.

5. Gesinterte Kugel nach einem der vorhergehenden Ansprüche, wobei $CeO_2 + 2,39 * Y_2O_3 \geq 0,212 * Z$.

6. Gesinterte Kugel nach einem der vorhergehenden Ansprüche, wobei der Gehalt an $CeO_2 + Y_2O_3$ kleiner als 15,5 %, in Gewichtsprozent, bezogen auf Oxide, ist.

7. Gesinterte Kugel nach einem der vorhergehenden Ansprüche, wobei $CeO_2 + 1,4 * Y_2O_3 \leq 0,259 * Z$.

8. Gesinterte Kugel nach einem der vorhergehenden Ansprüche, wobei der $CeO_2$-Gehalt kleiner als 0,2 %, vorzugsweise kleiner als 0,1 %, ist.

9. Gesinterte Kugel nach einem der vorhergehenden Ansprüche, wobei der Gehalt an Oxiden, die von $ZrO_2$, $HfO_2$, $SiO_2$, $Al_2O_3$, $Y_2O_3$, $CeO_2$, $CaO$, $MgO$ verschieden sind, kleiner als 2 %, in Gewichtsprozent, bezogen auf Oxide, ist und/oder wobei der Oxidgehalt mehr als 99 % des Gesamtgewichts der Kugel darstellt.

10. Gesinterte Kugel nach einem der vorhergehenden Ansprüche, die einen Zirkongehalt von mehr als 35 % und weniger als 90 % und/oder einen Gehalt an stabilisiertem Zirkonoxid + Hafniumoxid von mehr als 10 % und weniger als 50 % und/oder einen Gehalt an monoklinem Zirkonoxid + Hafniumoxid von weniger als 35 % und/oder einen Korundgehalt von mehr als 10 % und weniger als 25 %, in Gewichtsprozent, bezogen auf die Gesamtmenge von kristallinen Phasen, aufweist.

11. Gesinterte Kugel nach dem vorhergehenden Anspruch, wobei der Zirkongehalt weniger als 68 %, in Gewichtsprozent, bezogen auf die Gesamtmenge von kristallinen Phasen, beträgt.

12. Gesinterte Kugel nach einem der vorhergehenden Ansprüche, die eine Gewichtsmenge an amorpher Phase, in Gewichtsprozent, bezogen auf das Gewicht der Kugel, von weniger als 25 % aufweist.

13. Gesinterte Kugel nach dem unmittelbar vorhergehenden Anspruch, wobei die amorphe Phase, ausgedrückt als Oxidform, Folgendes umfasst:

- MgO und SiO$_2$ und/oder
- Y$_2$O$_3$ und/oder
- Al$_2$O$_3$ und/oder
- CaO und/oder
- Na$_2$O und/oder
- K$_2$O und/oder
- P$_2$O$_5$.

**14.** Gesinterte Kugel nach einem der vorhergehenden Ansprüche, die eine Gesamtporosität von weniger als 6 %, eine Rundheit von mehr als 0,7 und eine Größe von weniger als 10 mm und mehr als 0,005 mm aufweist.

**15.** Vorrichtung, die aus einer Suspension, einer Mühle, einer Anlage zur Oberflächenbehandlung und einem Wärmetauscher ausgewählt ist, wobei die Vorrichtung ein Pulver umfasst, das mehr als 90 %, in Gewichtsprozent, Kugeln nach einem der vorhergehenden Ansprüche umfasst.

**16.** Verfahren zur Herstellung von gesinterten Kugeln nach einem der Ansprüche 1 bis 14, das die folgenden aufeinanderfolgenden Schritte umfasst:

a) gegebenenfalls das Mahlen eines oder mehrerer Pulver von Ausgangsmaterialien, vorzugsweise durch gemeinsames Mahlen, und

das Dosieren der gegebenenfalls gemahlenen Pulver von Ausgangsmaterialien,
um ein Partikelgemisch mit einer medianen Größe von weniger als 0,6 μm und einer Zusammensetzung zu erhalten, die so ausgelegt ist, dass nach Schritt g) gesinterte Kugeln erhalten werden, die eine Zusammensetzung aufweisen, die derjenigen einer gesinterten Kugel nach einem der Ansprüche 1 bis 14 entspricht,
wobei das Partikelgemisch Folgendes umfasst:

- Zirkonpartikel und Partikel aus stabilisiertem Zirkonoxid und
- Partikel aus einem MgO und/oder SiO$_2$ umfassenden Glas und/oder Partikel aus einer MgO enthaltenden Glaskeramik und/oder Partikel aus einem MgO und SiO$_2$ enthaltenden Verbindung,

b) gegebenenfalls das Trocknen des Partikelgemisches,
c) das Herstellen eines Einsatzmaterials aus dem gegebenenfalls getrockneten Partikelgemisch,
d) das Formen des Einsatzmaterials zu rohen Kugeln,
e) gegebenenfalls das Waschen der rohen Kugeln,
f) gegebenenfalls das Trocknen der gegebenenfalls gewaschenen rohen Kugeln,
g) das Sintern der gegebenenfalls getrockneten und/oder gewaschenen rohen Kugeln bei einer Sintertemperatur von mehr als 1330 °C und weniger als 1450 °C, um gesinterte Kugeln zu erhalten.

**Claims**

**1.** Sintered bead having:

- the following crystal phases, in percentages by mass based on crystal phases and for a total of 100%:

- 25% ≤ zircon, or "Z$_1$", ≤ 94%;
- 4% ≤ stabilized zirconia + stabilized hafnia, or "Z$_2$", ≤ 61%;
- monoclinic zirconia + monoclinic hafnia, or "Z$_3$", ≤ 50%;
- corundum ≤ 57%;
- crystal phases other than Z$_1$, Z$_2$, Z$_3$ and corundum < 10%;

- the following chemical composition, in percentages by mass based on oxides and for a total of 100%:

33% ≤ ZrO$_2$ + HfO$_2$, or "Z$_4$", ≤ 83.4%;

$HfO_2 \leq 2\%$;
$10.6\% \leq SiO_2 \leq 34.7\%$;
$Al_2O_3 \leq 50\%$;
$0\% \leq Y_2O_3$, or "$Z_5$";
$0\% \leq CeO_2$, or "$Z_6$";
$0.3\% \leq CeO_2 + Y_2O_3 \leq 19\%$, provided that

(1) $CeO_2 + 3.76*Y_2O_3 \geq 0.128*Z$, and
(2) $CeO_2 + 1.3*Y_2O_3 \leq 0.318*Z$,

with

$$Z=Z_4+Z_5+Z_6-(0.67*Z_1*(Z_4+Z_5+Z_6)/(0.67*Z_1+Z_2+Z_3));$$

$MgO \leq 5\%$;
$CaO \leq 2\%$;
oxides other than $ZrO_2$, $HfO_2$, $SiO_2$, $Al_2O_3$, $MgO$, $CaO$, $CeO_2$ and $Y_2O_3 < 5.0\%$.

2. Sintered bead according to the preceding claim, wherein $Al_2O_3 \leq 35\%$, $37\% \leq ZrO_2 + HfO_2$ and $12.6\% \leq SiO_2$, in percentages by mass based on oxides, and having a corundum content of 40% or less and a zircon content of 31% or more, in percentages by mass based on the total amount of crystal phases.

3. Sintered bead according to any one of the preceding claims, wherein $50\% \leq ZrO_2+HfO_2$ and/or $SiO_2 > 14\%$ and/or $Al_2O_3 > 5\%$ and/or $MgO > 0.1\%$ and/or $CaO > 0.1\%$.

4. Sintered bead according to any one of the preceding claims, wherein $25\% > Al_2O_3 > 10\%$ and/or $1.0\% > MgO > 0.15\%$ and/or $1.0\% > CaO > 0.2\%$, and/or wherein the $CeO_2 + Y_2O_3$ content is greater than 2.2%, in percentages by mass based on oxides.

5. Sintered bead according to any one of the preceding claims, wherein $CeO_2 + 2.39*Y_2O_3 \geq 0.212*Z$.

6. Sintered bead according to any one of the preceding claims, wherein the $CeO_2 + Y_2O_3$ content is less than 15.5%, in percentages by mass based on oxides.

7. Sintered bead according to any one of the preceding claims, wherein $CeO_2 + 1.4*Y_2O_3 \leq 0.259*Z$.

8. Sintered bead according to any one of the preceding claims, wherein the $CeO_2$ content is less than 0.2%, preferably less than 0.1%.

9. Sintered bead according to any one of the preceding claims, wherein the content of oxides other than $ZrO_2$, $HfO_2$, $SiO_2$, $Al_2O_3$, $Y_2O_3$, $CeO_2$, $CaO$, $MgO$ is less than 2%, in percentages by mass based on oxides, and/or the oxide content represents more than 99% of the total mass of said bead.

10. Sintered bead according to any one of the preceding claims, having a zircon content of more than 35% and less than 90%, and/or a stabilized zirconia + hafnia content of more than 10% and less than 50%, and/or a monoclinic zirconia + hafnia content of less than 35%, and/or a corundum content of more than 10% and less than 25%, in percentage by mass based on the total amount of crystal phases.

11. Sintered bead according to the preceding claim, wherein the zircon content is less than 68%, in percentage by mass based on the total amount of crystal phases.

12. Sintered bead according to any one of the preceding claims, having a mass amount of amorphous phase, in percentage by mass based on the mass of the bead, of less than 25%.

13. Sintered bead according to the immediately preceding claim, wherein the amorphous phase, expressed as oxide, comprises

- MgO and $SiO_2$, and/or
- $Y_2O_3$ and/or
- $Al_2O_3$ and/or
- CaO and/or
- $Na_2O$ and/or
- $K_2O$ and/or
- $P_2O_5$.

14. Sintered bead according to any one of the preceding claims, having a total porosity of less than 6%, a sphericity greater than 0.7 and a size of less than 10 mm and greater than 0.005 mm.

15. Device selected from a suspension, a grinder, a surface treatment apparatus and a heat exchanger, said device comprising a powder comprising more than 90% in percentages by mass of beads according to any one of the preceding claims.

16. Process for manufacturing sintered beads according to any one of Claims 1 to 14, comprising the following successive steps:

   a) optionally, grinding one or more raw material powders, preferably by co-grinding, and

   dosing said optionally ground raw material powders,
   so as to obtain a particulate mixture having a median size of less than 0.6 $\mu$m, and a composition suitable for obtaining, at the end of step g), sintered beads having a composition in accordance with that of a sintered bead according to any one of Claims 1 to 14,
   the particulate mixture comprising

   - zircon particles and stabilized zirconia particles and
   - particles of a glass containing MgO and/or $SiO_2$, and/or particles of a glass-ceramic containing MgO and/or particles of a compound comprising MgO and $SiO_2$,

   b) optionally, drying said particulate mixture,
   c) preparing a starting feed from said particulate mixture, optionally dried,
   d) shaping the starting feed in the form of raw beads,
   e) optionally, washing the raw beads,
   f) optionally, drying the raw beads, optionally washed,
   g) sintering the raw beads, optionally dried and/or washed, at a sintering temperature above 1330°C and below 1450°C to obtain sintered beads.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013011436 A1

- US 2004007789 A